# EUROPÄISCHE PATENTSCHRIFT

(11) **EP 1 318 328 B1**
(45) Veröffentlichungstag und Bekanntmachung des Hinweises auf die Patenterteilung: **30.09.2009**
(21) Anmeldenummer: 02027131.8
(22) Anmeldetag: 04.12.2002
(51) Int. Cl.: F16H 1/10, F16H 55/02

(54) **Vorrichtung eines Getriebes in einem elektromechanischen Motor**
Transmission device for a electric motor
Dispositif de transmission pour moteur électrique

(30) Priorität: 04.12.2001 DE 10159434
(43) Veröffentlichungstag der Anmeldung: 11.06.2003
(73) Patentinhaber: SIEMENS AKTIENGESELLSCHAFT, 80333 München (DE)
(72) Erfinder: Fischer, Bernhard, 84513 Toeging Am Inn (DE); Gottlieb, Bernhard, Dr., 81739 München (DE); Kappel, Andreas, Dr., 85649 Brunnthal (DE); Ulivieri, Enrico, 81541 München (DE)

(56) Entgegenhaltungen:
- DE-A1- 4 435 996
- DE-A1- 19 952 946
- US-A- 5 931 054
- US-B1- 6 340 127

## Beschreibung

Die Erfindung betrifft eine Ausführung eines Getriebes in einem elektromechanischen Motor

Motoren welche auswählbare Geschwindigkeiten unter Beibehaltung von hohen Drehmomenten erzeugen können wurden konventionell mit eine hohen Anzahl von Gängen ausgestattet. Diese Motoren haben zum Nachteil, dass die erhöhte Zahl von Gängen mit den dazugehörigen elektrischen Antriebelementen einen großen Kostenaufwand verursachen.

Somit wurde nach einer Möglichkeit gesucht, leistungsfähigen elektromechanischen Motoren mit kleinem Stromverbrauch zu konzipieren. Diese Aufgabe wurde durch vor durch die Entwicklung von piezoelektrischen Antriebssystemen gelöst.

Die Anwendung von kleinen Motoren mit hohem Drehmoment ist breit ausgelegt. Insbesondere können mit solchen Motoren äußerst genaue Bewegungen ausgeführt werden, wie z.B. beim Einsatz eines Montageroboters oder sonstige Positionierungsinstrumente. Die Anwendung dieser Motoren ist somit für bewegliche Instrumente jeder Art implizit, bei denen Massen-, Größen-, Kraft- und Kosteneinschränkungen eine entscheidende Rolle spielen.

Eine wichtige Klasse von piezoelektrischen Motoren ist der Wanderwellenmotor. Dieser Motor wird mit einem Mechanismus betrieben, der eine Bewegung durch die Verstärkung und Wiederholung von Mikrodeformationen von piezoelektrisch aktiven Materialien generiert.

In einer einfachen Vorrichtung ist ein Stator mit einem rotierbaren Ring verbunden, wobei die aktiven Materialien verwendet werden, um eine kreisförmige Bewegung auf der Oberfläche des Stators an Kontaktpunkten zwischen dem Ring und dem Stator zu erzeugen. Die Reibung zwischen dem Ring und dem Stator erzeugt zunächst eine berichtigende Umwandlung der Mikrobewegung an den Kontaktpunkten in eine umfassende, rotierende Bewegung des Rings. Diese Reibung wird anhand einer Druckausübung an ausgewählten Stellen des Rings ermöglicht. Eine umfassende Beschreibung eines piezoelektrischen Antriebprinzips ist in [1] angegeben.

Nachteilig bei dieser Vorrichtung und bei diesem Verfahren ist vor allem der hoher Verschleiß der durch den Friktionsantrieb erzeugt wird und die Beschränkung auf eine kleine Baugröße.

Aus [2] ist eine gattungsbildende Vorrichtung bekannt, bei der ein Wanderwellenmotor mit Stoß-generierenden Antriebselementen in Gang gesetzt wird. In diesem System wird ein kreisförmiger Ring periodisch von mehreren Antriebselementen anhand Stößen derart aktiviert, dass eine bewegliche Welle von der Innenseite des Rings abrollen kann. Diese Konstruktion kann den Nachteil des Verschleißes zwischen dem Ring und der Welle, der auf Grund des Friktionsantriebs unumgänglich ist, teils erleichtern.

Die hiermit erzeugte Vortriebkraft wird allerdings nachteilig nur durch Reibung zwischen dem äußeren Ring und der Welle erzeugt. Dabei kann als Vortriebkraft bei Reibschluss von Stahl auf Stahl nur ca. 10% der Andruckkraft erreicht werden. Somit ist die Leistungsfähigkeit einer an sich höchst vorteilhaften Vorrichtung eingeschränkt.

Aus [3] ist ein Drehantrieb bekannt, bei dem in einem Gehäuse auf einer Welle ein Rotor drehfest gelagert ist. Es wird bei dieser Anordnung erreicht, dass die Außenverzahnung eines Rotors mit der Innenverzahnung eines Gehäuseteils formschlüssig ineinander greifen.

Nachteilig bei dieser Vorrichtung ist, insbesondere bei einer mikromechanischen Ausbildung, dass die Verzahnung am Außenrand des Rotors und die Verzahnung am Innenrand des Ringes voll ausgebildet sind und somit hohe Herstellungskosten anfallen.

Somit liegt der Erfindung die Aufgabe zugrunde, eine Möglichkeit anzugeben, bei dem eine hohe Leistung der Antriebkraft eines Getriebes in einem Elektromotor gewährleistet wird, ohne dass bei der Herstellung hohe kosten anfallen.

Diese Aufgabe wird durch die Merkmale des Anspruchs 1 gelöst. Weitere, vorteilhafte Ausführungsformen dieser Vorrichtung ergeben sich aus den Unteransprüchen.

Die Erfindung besteht im wesentlichen darin, dass durch eine Verzahnung der Innenfläche eines Antriebsringes und der Oberfläche einer Welle eine deutlich erhöhte Vortriebkraft durch Formschluss erreicht wird, wobei die Verzahnungen jeweils nur teils ausgebildet sein müssen.

Es ergibt sich somit der wesentliche Vorteil, dass geringere Kosten bei der Produktion dieser Vorrichtung anfallen, trotzdem aber ein optimaler Formschluss und eine hohe Antriebkraft erreicht werden kann..

Bei der Vorrichtung zur Übertragung von Antriebskraft in einem elektromechanischen Motor zwischen einem Antriebsring und einem von dem Antriebsring umhüllten Innenteil, ist das Innenteil kreisförmig und mit einer Verzahnung am Außenrande des Innenteils ausgebildet und der Antriebsring mit einer Verzahnung auf der Innenseite ausgebildet. Dabei ist das Innenteil grundsätzlich mit dem Antriebsring derart kontaktierbar, dass durch Bewegungen des Antriebsringes und eines Formschlusses zwischen der Verzahnung des Antriebsringes und der Verzahnung des Innenteils, das Innenteil mit der Bewegung des Antriebsrings mitgeführt wird. Die Verzahnungen weisen jeweils Zähne auf, welche von Vertiefungen getrennt sind. Mindestens eine Verzahnung ist gleichmäßig und vollständig ausgebildet. Die andere Verzahnung, welche unvollständig ausgebildet sein kann, weist gleichmäßig verteilte Zähne auf, von denen sich zu jeder Zeit mindestens einer im Eingriff mit der erst genannten Verzahnung befindet.

Dabei ist das Innenteil des Motors vorzugsweise ein Rotor und der elektromechanische Motor ist ein Piezomotor. Der Motor könnte ferner ein Stößel angetriebener Piezomotor sein.

Insbesondere für die oben genannten Motoren wird der Einsatz von Mikroverzahnungen bevorzugt.

In einer Weiterbildung der Erfindung ist die Verzahnung am Innenrand des Antriebringes nicht vollständig ausgebildet und die Zähne derart voneinander getrennt, dass sich der Abstand zwischen zwei Zähnen am Innenrand des Antriebsringes nach Ergebnis einer ganzzahligen oder nicht-ganzzahligen Teilung der ausbildbaren Zähnen am Innenrand des Antriebringes richtet.

Im umgekehrten Sinne kann die Verzahnung am Außenrand des Innenteils nicht vollständig ausgebildet und die Zähne derart voneinander getrennt sein, dass sich der Abstand zwischen zwei Zähnen am Außenrand des Innenteils nach Ergebnis einer ganzzahligen oder nicht-ganzzahligen Teilung der ausbildbaren Zähnen am Außenrand des Innenteils richtet.

Die Erfindung wird in einer bevorzugten Form derart verwendet, dass jeweils die Positionen des Antriebringes und des Innenteils so aneinander geordnet sind, dass sich immer mindestens ein Zahn des Innenteils mit einem Zahn des Antriebringes im Eingriff befindet.

Die Erfindung kann dabei für einen Piezomotor verwendet werden. Ferner kann der Antriebsring und somit der Rotor oder die Welle durch Stößel, welche durch Piezoaktoren erzeugt werden, betrieben werden. Die Erfindung kann in einem Piezomotor eingesetzt werden.

Die Erfindung und weitere Vorteile werden von in den Zeichnungen und in den dargestellten Ausführungs- und Anordnungsbeispielen näher erläutert.

Dabei zeigt
- Figur 1: jeweils eine Innenverzahnung eines Antriebringes und eine Außenverzahnung einer Welle, und
- Figur 2: jeweils eine Innenverzahnung eines Antriebsringes mit reduzierter Anzahl von Zähnen und eine Außenverzahnung einer Welle, und
- Figur 3: jeweils eine Innenverzahnung eines Antriebsringes und eine Außenverzahnung einer Welle mit reduzierter Anzahl von Zähnen.

In der Erfindung wird grundsätzlich durch Formschluss mittels einer Verzahnung die erzielbare Vortriebskraft durch die von einer piezoelektrischen Antriebseinheit erzielbare Antriebskraft bestimmt. Die Verzahnung wird so aufgebracht, dass die Innenverzahnung des Antriebsringes mindestens einen Zahn mehr aufweist (n+k; k≥1) als die Außenverzahnung der Welle (n), wobei k und n durchgehend ganzzahlige Werte sind. Eine Periode der kreisförmigen Verschiebebewegung des Ringes erzeugt dann genau einen Vortrieb der Welle um k Zähne. Dabei werden die Größen und Positionen der Welle und des Außenringes derart eingehalten, dass sich mindestens ein Zahn der Welle mit einem Zahn des Ringes im Eingriff befindet. Dabei wird ein Zahn der Welle in eine Vertiefung neben einem Zahn des Außenringes, welche sich gegenüber liegen, eingesetzt. Im Falle, dass sich bei einem bestimmten k-Wert die Zähne von Welle und Ring genau gegenüberstehen, werden die Positionen der Welle und des Antriebsrings derart kontrolliert, dass genügend Abstand vorliegt, dass sie sich ungehindert aneinander vorbei bewegen können.

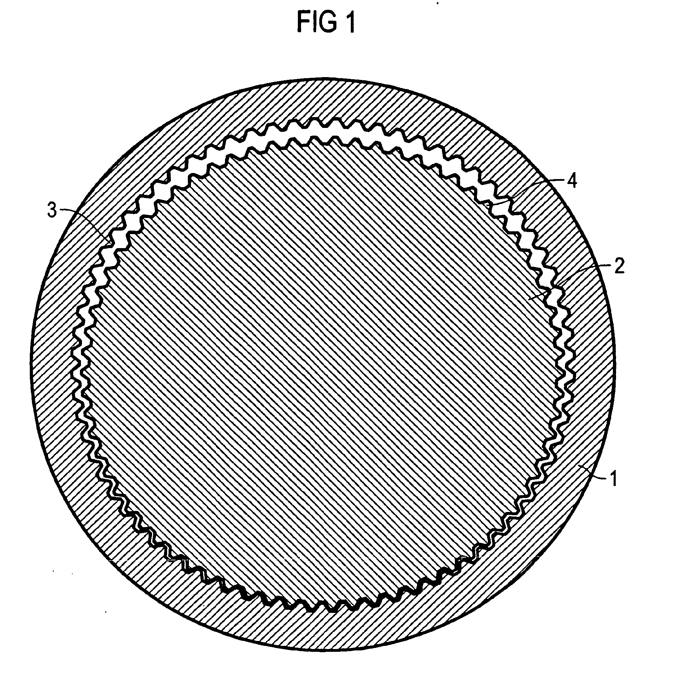

In **Figur 1** wird die Grundausführungsform der Erfindung dargestellt. Der Antriebsring wird mit 1, die Welle mit 2 und deren Verzahnungen jeweils mit 3 und 4 bezeichnet.

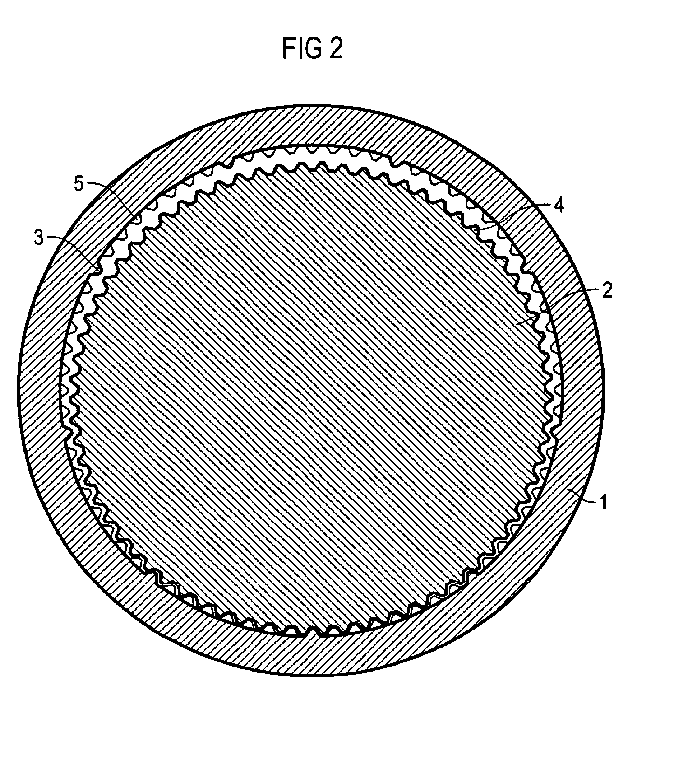

In **Figur 2** wird eine Vereinfachung der Erfindung dargestellt. Hier wird die Außenverzahnung 4 der Welle 2, voll ausgebildet wobei die Innenverzahnung 3 des Antriebsringes 1 nur mit jedem m-ten Zahn ausgebildet wird. Dabei ist m ein Teiler der gesamten Anzahl der Zähne n der Innenverzahnung 3. Die fehlende Zahnpositionen sind mit 5 gekennzeichnet. Im Falle, dass die Zahnzahl n der Innenverzahnung 3 keine geeigneten ganzzahligen Teiler m hat, kann auch ein nicht-ganzzahliger Teiler m für die Innenverzahnung 3 gewählt werden, indem der Abstand zwischen den Zähnen, der durch die Teilung erzeugte Anzahl der Zähne definiert, variiert wird. In diesem Ausführungsbeispiel weist die Innenverzahnung 3 des Antriebsringes 1 72 Zähne auf, wobei die Außenverzahnung 4 der Welle 2 71 Zähne aufweist. Somit könnte beispielsweise n=72 durch m=8 geteilt werden, so dass insgesamt 9 mal nur jeder 8te Zahn ausgebildet ist. Besitzt die Innenverzahnung des Antriebsringes allerdings n=70 Zähne, so könnte beispielsweise jeder 8te Zahn von 7 Zahnpositionen getrennt sein, wobei die übrigen 14 möglichen Zahnpositionen von 2 Zähnen mit einem Abstand von 7 Zahnpositionen gefüllt werden. Die Vortriebskraft wird auch in einer solchen Ausführungsform erreicht, da minimal immer nur ein Zahn der Welle mit einem Zahn des Ringes im Eingriff stehen muss.

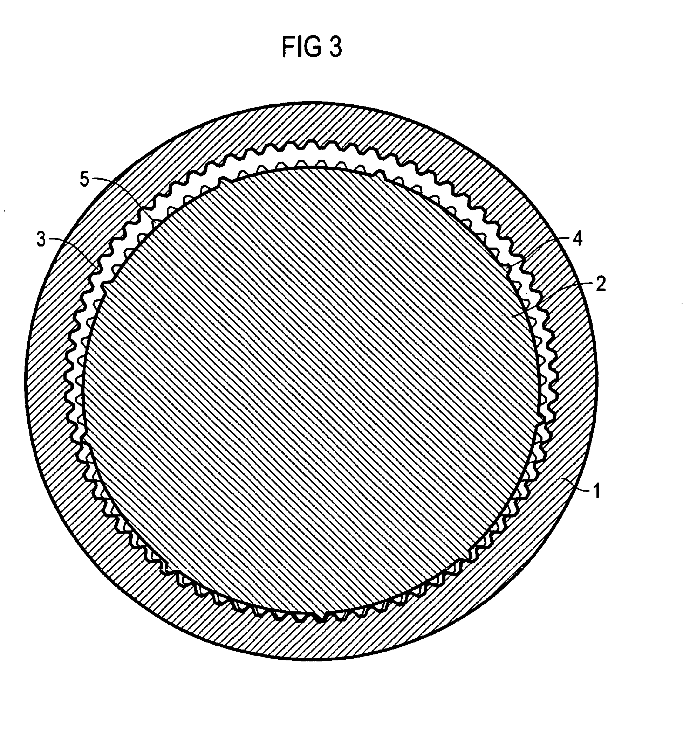

In **Figur 3** ist eine ähnliche Ausführungsform wie in Figur 2 dargestellt, wobei in einem umgekehrten Sinne die Außenverzahnung 4 der Welle 2 nur teils ausgebildet ist. Die Bedingung, dass nur jeder m-te Zahn auf der Welle ausgebildet wird, wobei m ein Teiler der Zahnzahl auf der Welle 2 ist, wird wie im zweiten Ausführungsbeispiel erläutert mit der Flexibilität der Abstandsauswahl eingehalten.

Der Vorteil einer Verzahnung nach den oben genannten Beispielen, besonders einer Mikroverzahnung, wo nur jeder m-ter Zahn der Innenverzahnung des Antriebsringes oder der Außenverzahnung der Welle 2 ausgebildet ist, kommt primär in der Produktion des Innenteils oder des Antriebringes zum Vorschein. Eine geringere Anzahl von Zähnen ist in der Herstellung der Teile weniger kostenaufwendig. Ferner wird durch mindestens einer voll ausgebildeten Verzahnung entweder auf der Innenverzahnung des Antriebsringes oder auf der Außenverzahnung der Welle gewährleistet, das kein Abrutschen der Welle an dem Antriebsring oder umgekehrt möglich ist und somit die Stabilität der Vorrichtung gesteigert wird.

Die Erfindung kann in jedem Motor oder Getriebe eingesetzt werden, bei dem eine Verbindung zwischen einem Antriebsring mit einer Welle oder mit einem Motor zur Erzeugung einer Antriebskraft verwendet wird.

Im Rahmen dieses Dokuments sind folgende Veröffentlichungen zitiert:
[1] Rotary Ultrasonic Motors Actuated by Travelling Flexural Waves by Yoseph Bar-Cohen et al, JPL, Caltech, Pasadena aus den Proceedings of the Smart Structures and Materials Symposium, San Diego CA, March 1-5 1998, Paper 3329-82
[2] Offenlegungschrift DE 4435996 A1, Anmelder: Robert Bosch Gmbh, 08.10.94
[3] Offenlegungschrift DE 19952946 A1, Anmelder: Siemens AG, 03.11.1999

## Patentansprüche

1. Vorrichtung zur Übertragung von Antriebskraft zwischen einem Antriebsring (1) und einem von dem Antriebsring (1) umhüllten Innenteil (2) die derart ausgebildet ist, dass das kreisförmige Innenteil (2) am äußeren Umfang eine Verzahnung (4) und der Antriebsring (1) eine Verzahnung (3) auf der Innenseite aufweist und durch Bewegungen des Antriebsringes (1) und eines Formschlusses zwischen der Verzahnung (3) des Antriebsringes (1) und der Verzahnung (4) des Innenteils (2), das Innenteil (2) mit der Bewegung des Antriebsrings (1) mitgeführt wird,
**dadurch gekennzeichnet, dass**
- nur eine der Verzahnungen (3, 4) vollständig ausgebildet ist,
- die andere Verzahnung (3, 4) unvollständig ist und gleichmäßig verteilte Zähne aufweist, von denen sich zu jeder Zeit mindestens einer im Eingriff mit der anderen Verzahnung (3,4) befindet.

2. Vorrichtung nach Anspruch 1, bei der das Innenteil (2) ein Rotor und / oder eine Welle ist.

3. Vorrichtung nach Anspruch 1, bei der der elektromechanischer Motor ein Piezomotor ist.

4. Vorrichtung nach einem der Ansprüche 1 oder 2, bei der der Motor ein stößelangetriebener Piezomotor ist.

5. Vorrichtung nach einem der Ansprüche 1 bis 3, bei der die Verzahnungen (3, 4) Mikroverzahnungen sind.

6. Vorrichtung nach einem der Ansprüche 1 bis 4, bei der die Verzahnung am Innenrand des Antriebringes (1) nicht vollständig ausgebildet ist und die Zähne derart voneinander getrennt sind, dass sich der Abstand zwischen zwei Zähnen am Innenrand des Antriebsringes (1) nach Ergebnis einer ganzzahligen oder nicht-ganzzahligen Teilung der ausbildbaren Zähnen am Innenrand des Antriebringes richtet.

7. Vorrichtung nach einem der Ansprüche 1 bis 4, bei der die Verzahnung am Außenrand des Innenteil (2) nicht vollständig ausgebildet ist und die Zähne derart voneinander getrennt sind, dass sich der Abstand zwischen zwei Zähnen am Außenrand des Innenteils (2) nach Ergebnis einer ganzzahligen oder nicht-ganzzahligen Teilung der ausbildbaren Zähnen am Außenrand des Innenteils (2) richtet.

8. Verwendung der Vorrichtung nach einem der Ansprüche 1 bis 7, bei der jeweils die Positionen des Antriebringes (1) und des Innenteils (2) so aneinander geordnet sind, dass sich immer mindestens ein Zahn des Innenteils mit einem Zahn des Antriebringes (1) im Eingriff befindet.

9. Verwendung nach Anspruch 8, bei der sowohl der Antriebring (1) als auch die Welle oder der Rotor in einem Piezomotor eingesetzt wird.

10. Verwendung nach Anspruch einem der Ansprüche 7 oder 8, bei der der Antriebring (1) und somit der Rotor oder die Welle durch Stößel, welche durch Piezoaktoren erzeugt werden, betrieben werden.

## Claims

1. Apparatus for transmission of drive force between a drive ring (1) and an inner part (2) surrounded by the drive ring (1) which is embodied such that the circular inner part (2) has sets of teeth (4) on its outer circumference and the drive ring (1) has sets of teeth (3) on its inner sides and, by movements of the drive ring (1) and a positive fit between the sets of teeth (3) of the drive ring and the sets of teeth (4) of the inner part (2), the inner part (2) is carried along with the movement of the drive ring (1),
**characterised in that**
- only one of the sets of teeth (3, 4) is embodied complete,
- the other set of teeth (3, 4) is incomplete and has evenly distributed teeth, of which at least one is engaging with the other teeth (3, 4) at any given time.

2. Device according to claim 1, in which the inner part (2) is a rotor and/or a shaft.

3. Device according to claim 1, in which the electromechanical motor is a piezo motor.

4. Device according to one of claims 1 or 2, in which the motor is a plunger-operated piezo motor.

5. Device according to one of claims 1 or 3, in which the sets of teeth (3, 4) are micro teeth.

6. Device according to one of claims 1 or 4, in which the sets of teeth are not embodied complete on the inner edge of the drive ring (1) and the teeth are separated from each other so that the gap between two teeth on the inner edge of the drive ring (1) is determined by the result of an integer or non-integer distribution of the teeth able to be embodied on the inner edge of the drive ring.

7. The apparatus according to one of claims 1 to 4, in which the sets of teeth on the outer edge of the inner part (2) are not embodied complete and the teeth are separated from each other such that the gap between two teeth on the outer edge of the inner part (2) is determined by the result of an integer or non-integer distribution of the teeth able to be embodied on the outer edge of the inner part (2).

8. Use of the apparatus according to one of the claims 1 to 7, in which the positions of the drive ring (1) and the inner part (2) respectively are arranged in relation to each other so that at least one tooth of the inner part is engaging with a tooth of the drive ring (1).

9. Use according to claim 8, in which both the drive ring (1) and also the shaft or the rotor are used in a piezo motor.

10. Use according to one of claims 7 or 8, in which the drive ring (1) and thus the rotor or the shaft are driven by plungers which are created by piezo actuators.

## Revendications

1. Dispositif de transmission d'une force d'entraînement entre une bague d'entraînement (1) et une pièce intérieure (2) enveloppée par la bague d'entraînement (1), qui est exécuté de manière à ce que la pièce intérieure (2) circulaire soit pourvue d'une denture (4) sur la circonférence extérieure et la bague d'entraînement (1) d'une denture (3) sur le côté intérieur et, grâce à des mouvements de la bague d'entraînement (1) et à une conjugaison de forme entre la denture (3) de la bague d'entraînement (1) et la denture (4) de la pièce intérieure (2), la pièce intérieure (2) est entraînée par le mouvement de la bague d'entraînement (1)
**caractérisé en ce que**
- une seule des dentures (3, 4) est exécutée de manière complète,
- l'autre denture (3, 4) est incomplète et comprend des dents uniformément réparties dont au moins une se trouve, à chaque instant, engrenée avec l'autre denture (3, 4).

2. Dispositif selon la revendication 1, dans lequel la pièce intérieure (2) est un rotor et/ou un arbre.

3. Dispositif selon la revendication 1, dans lequel le moteur électromécanique est un moteur piézo-électrique.

4. Dispositif selon l'une des revendications 1 ou 2, dans lequel le moteur est un moteur piézo-électrique à commande par poussoir.

5. Dispositif selon l'une des revendications 1 à 3, dans lequel les dentures (3, 4) sont des microdentures.

6. Dispositif selon l'une des revendications 1 à 4, dans lequel la denture n'est pas exécutée de manière complète sur le bord intérieur de la bague d'entraînement (1) et les dents sont séparées les unes des autres de manière à ce que la distance entre deux dents sur le bord intérieur de la bague d'entraînement (1) soit conforme au résultat d'une division entière ou non entière des dents pouvant être exécutées sur le bord intérieur de la bague d'entraînement.

7. Dispositif selon l'une des revendications 1 à 4, dans lequel la denture n'es pas exécutée de manière complète sur le bord extérieur de la pièce intérieure (2) et les dents sont séparées les unes des autres de manière à ce que la distance entre deux dents sur le bord extérieur de la pièce intérieure (2) soit conforme au résultat d'une division entière ou non entière des dents pouvant être exécutées sur le bord extérieur de la pièce intérieure (2).

8. Utilisation du dispositif selon l'une des revendications 1 à 7, dans laquelle la bague d'entraînement (1) et la pièce intérieure (2) ont des positions agencées à chaque fois l'une près de l'autre de manière à ce qu'au moins une dent de la pièce intérieure se trouve toujours engrenée avec une dent de la bague d'entraînement (1).

9. Utilisation selon la revendication 8, dans laquelle non seulement la bague d'entraînement (1), mais également l'arbre ou le rotor, sont utilisés dans un moteur piézo-électrique.

10. Utilisation selon l'une des revendications 7 ou 8, dans laquelle la bague d'entraînement (1), et donc le rotor ou l'arbre, sont actionnés par des poussoirs qui sont produits par des actionneurs piézo-électriques.
